# FASCICULE DE BREVET EUROPEEN

(11) **EP 2 257 905 B1**
(45) Date de publication et mention de la délivrance du brevet: **04.05.2016**
(21) Numéro de dépôt: 09728294.1
(22) Date de dépôt: 19.03.2009
(51) Int. Cl.: H04L 29/08, G06F 21/56, H04L 29/06

(54) **PROCÉDÉ ET DISPOSITIF DE DÉTECTION DE VERS PASSIFS DANS UN RÉSEAU DE PAIRS**
VERFAHREN UND VORRICHTUNG FÜR PASSIVE WURMERKENNUNG IN EINEM PEER-TO-PEER-NETZWERK
METHOD AND DEVICE FOR PASSIVE WORM DETECTION IN A PEER-TO-PEER NETWORK

(30) Priorité: 27.03.2008 FR 0851961
(43) Date de publication de la demande: 08.12.2010
(73) Titulaire: Orange, 75015 Paris (FR)
(72) Inventeur: CARLINET, Yannick, F-92130 Issy Les Moulineaux (FR); KHIAT, Nassima, F- 75013 Paris (FR)
(74) Mandataire: Delumeau, François Guy
(86) Numéro de dépôt international: PCT/FR2009/050466
(87) Numéro de publication internationale: WO 2009/122110

(56) Documents cités:
- PELE LI ET AL: "A survey of internet worm detection and containment" IEEE COMMUNICATIONS SURVEYS, IEEE, NEW YORK, NY, US, vol. 10, no. 1, 1 janvier 2008 (2008-01-01), pages 20-35, XP011207105 ISSN: 1553-877X
- CHEN G. AND GRAY R. S.: "Simulating non-scanning worms on peer-to-peer networks" PROCEEDINGS OF THE 1ST INTERNATIONAL CONFERENCE ON SCALABLE INFORMATION SYSTEMS (INFOSCALE'06), [Online] 29 mai 2006 (2006-05-29), XP002501465 Hong Kong Extrait de l'Internet: URL:http://delivery.acm.org/10.1145/115000 0/1146876/a29-chen.pdf?key1=1146876&key2=3 708815221&coll=GUIDE&dl=GUIDE&CFID=7718907 &CFTOKEN=43461470> [extrait le 2008-10-23]

## Description

### Arrière-plan de l'invention

L'invention se situe dans le domaine de la détection des attaques malicieuses pouvant affecter les pairs d'un réseau de pairs.

Elle vise plus particulièrement un mécanisme pour détecter des fichiers copiés ou installés frauduleusement dans une zone de fichiers partagés dans le réseau par un pair.

Cette copie frauduleuse peut notamment être l'action d'un logiciel téléchargé par le pair et connu de l'homme du métier sous le nom de "ver passif".

De façon connue, l'objectif d'un tel ver passif est double, à savoir infecter les pairs attaqués et se propager à d'autres pairs via le réseau. Au contraire d'un ver "actif", un ver passif se propage sans rechercher activement les pairs à infecter, attendant, au contraire, d'être téléchargé par ses futures victimes.

Pour se propager dans le réseau, un ver passif se place donc dans la zone des fichiers partagés par un pair, généralement en prenant un nom susceptible d'éveiller l'intérêt des utilisateurs des autres pairs dans le but d'être téléchargé par ces derniers.

Un ver passif peut aussi se dupliquer (ou se cloner) sous un ou plusieurs noms dans la zone des fichiers partagés de l'utilisateur, afin d'augmenter ses chances de propagation vers d'autres pairs.

La solution la plus répandue pour répondre aux problèmes d'infection informatique consiste à utiliser des logiciels antivirus aptes à scanner un fichier et à vérifier si sa signature correspond à celle d'un ver ou d'un virus connu.

Cette solution présente un inconvénient majeur en ce qu'elle ne permet de détecter que les vers et virus déjà connus, l'éditeur du logiciel antivirus devant en permanence mettre à jour sa base de données de signatures.

Une autre solution pour détecter la propagation des vers dans un réseau de pairs, connue sous le nom IDS ("Intrusion Detection System") se base sur l'analyse du trafic d'un ensemble de pairs dans l'espoir de détecter des signes d'activité provenant des vers.

Mais une telle technique ne peut s'appliquer à la détection de vers passifs, ces derniers ne générant aucun trafic en dehors du trafic normal du logiciel d'échange de fichiers.

### Objet et résumé de l'invention

La présente invention vise un procédé de détection des fichiers installés frauduleusement dans un pair d'un réseau de pairs, notamment, mais non exclusivement, par l'action malveillante d'un ver passif, cette solution ne présentant pas les inconvénients de celles de l'art antérieur.

Selon un premier aspect, l'invention concerne un procédé de détection d'au moins un fichier installé frauduleusement dans un premier pair d'un réseau de pairs, caractérisé en ce qu'il comporte :
- une étape de détermination d'une première liste comportant des fichiers ajoutés localement dans une zone de fichiers partagés dans le réseau par ledit premier pair;
- une étape d'identification d'au moins un deuxième pair à partir duquel ledit premier pair a téléchargé au moins un fragment de fichier dans ledit réseau ;
- une étape de détermination, pour au moins un deuxième pair identifié, d'une deuxième liste comportant des fichiers ajoutés localement dans une zone de fichiers partagés dans le réseau par ce deuxième pair ;
- une étape de recherche, pour au moins une des deuxièmes listes, d'au moins un fichier commun à ladite première liste et ladite deuxième liste ; et
- une étape au cours de laquelle on identifie ledit au moins un fichier commun trouvé comme étant un fichier installé frauduleusement dans ledit premier pair, si le nombre des fichiers communs trouvés est supérieur à un seuil prédéterminé.

Corrélativement, l'invention concerne un dispositif de détection d'au moins un fichier installé frauduleusement dans un premier pair d'un réseau de pairs, caractérisé en ce qu'il comporte :
- des moyens de détermination d'une première liste comportant des fichiers ajoutés localement dans une zone de fichiers partagés dans le réseau par ledit premier pair ;
- des moyens d'identification d'au moins un deuxième pair à partir duquel ledit premier pair a téléchargé au moins un fragment de fichier dans ledit réseau ;
- des moyens de détermination, pour au moins un deuxième pair identifié, d'une deuxième liste comportant des fichiers ajoutés localement dans une zone de fichiers partagés dans le réseau par ce deuxième pair ;
- des moyens de recherche, pour au moins une des deuxièmes listes, d'au moins un fichier commun à ladite première liste et ladite deuxième liste ; et
- des moyens pour identifier ledit au moins un fichier commun trouvé comme étant un fichier installé frauduleusement dans ledit premier pair, si le nombre des fichiers communs trouvés est supérieur à un seuil prédéterminé.

L'invention concerne également un système de détection d'au moins un fichier installé frauduleusement dans un premier pair d'un réseau de pairs comprenant :
- un dispositif de détection tel que décrit précédemment ;
- au moins une sonde de supervision des échanges dans un réseau de pairs comportant :
   - des moyens de détection de fragments de fichiers téléchargés par au moins un pair dudit réseau ; et
   - des moyens d'envoi au dispositif de détection d'un message comportant un identifiant dudit pair et au moins un identifiant desdits fragments de fichiers.

D'une façon générale, la détection de fichiers frauduleux par l'invention se base sur la comparaison de listes de fichiers ajoutés localement dans une zone de fichiers partagés dans le réseau par différents pairs.

De façon connue, la liste de fichiers partagés par un pair peut être modifiée soit consécutivement à un téléchargement de fichier, soit par l'ajout ou le retrait local d'un fichier par l'utilisateur de ce pair.

L'invention repose sur le principe qu'il existe peu de chances pour que plusieurs utilisateurs rajoutent localement un même fichier dans leurs zones de partage respectives.

En conséquence, si deux pairs comportent des fichiers ajoutés localement dans leurs zones de partage en commun, et qu'au moins un fragment de fichier a été téléchargé dans le réseau entre ces deux pairs, on considérera, conformément à l'invention, que ces fichiers en commun sont les clones d'un ver passif copiés frauduleusement dans les zones de partage suite au téléchargement précité.

De tels clones seront donc détectés par l'invention.

Bien entendu, il est toujours possible que deux pairs comportent des fichiers communs parmi les fichiers ajoutés localement dans leurs zones de partage, de façon fortuite, sans pour autant que ces fichiers y aient été installés frauduleusement.

Afin de minimiser le risque de faux positif (détection alors qu'il n'y a pas d'infection), l'invention propose, dans un mode particulier de réalisation, de conserver lors de l'étape de recherche uniquement les fichiers communs qui ont aussi été ajoutés localement dans la zone de fichiers partagés dans le réseau d'un troisième pair à partir duquel le deuxième pair a téléchargé au moins un fragment de fichier dans le réseau.

Autrement dit, dans ce mode de réalisation, un fichier n'est considéré comme étant installé frauduleusement que s'il a été ajouté localement dans les zones de partage d'un pair, d'une source de ce pair et d'une source de cette source.

Dans un autre mode particulier de réalisation, on peut aussi décider de ne conserver que les fichiers communs qui ont aussi été ajoutés localement dans la zone des fichiers partagés d'un quatrième pair du réseau qui a lui-même téléchargé au moins un fragment de fichier à partir du premier pair.

Un fichier est alors considéré comme installé frauduleusement dans un pair s'il a en outre été téléchargé à partir de ce pair.

Dans un autre mode de réalisation, on peut aussi décider de ne conserver que les fichiers communs qui ont aussi été ajoutés localement dans la zone des fichiers partagés d'un cinquième pair du réseau qui a lui-même téléchargé au moins un fragment de fichier à partir d'une source du premier pair.

Un fichier est alors considéré comme installé frauduleusement dans un pair s'il a en outre été téléchargé par un autre pair à partir de la même source.

Chacun de ces mécanismes peut se généraliser sur plus de deux niveaux.

L'homme du métier comprendra que le seuil prédéterminé à partir duquel on considère qu'il y a infection malicieuse est aussi un mécanisme pour limiter le risque de faux positifs. Bien entendu, ce seuil prédéterminé peut être fixé à 1.

Dans un mode particulier de réalisation, le procédé de détection comporte une étape au cours de laquelle on identifie que le dernier fichier téléchargé par un pair juste avant l'ajout d'au moins un fichier détecté comme étant frauduleux dans la zone des fichiers partagés par ce pair est un ver passif circulant dans le réseau de pairs.

Ce mode de réalisation permet de détecter les vers passifs eux-mêmes qui circulent dans le réseau de pairs mais qui ne s'installent pas eux-mêmes dans la liste des fichiers ajoutés localement dans la zone des fichiers partagés dans le réseau par un pair.

L'invention se base donc principalement sur la comparaison des fichiers ajoutés localement dans les zones de partage de différents pairs.

Dans un premier mode de réalisation de l'invention, la comparaison se fait sur la base des noms de fichiers.

Il est en effet connu que les vers passifs se dupliquent le plus souvent sous différents noms attractifs pour augmenter leurs chances d'être téléchargés par les utilisateurs. Il y a donc une chance importante pour que la comparaison des noms de fichiers permette de détecter la présence de vers passifs ou de leurs clones.

Dans un autre mode de réalisation, la comparaison des fichiers se fait sur la base de signatures de ces fichiers, ce qui permet de détecter des copies frauduleuses de fichiers clonés sous des noms distincts.

Dans un mode particulier de réalisation de l'invention, la recherche des fichiers communs se fait à la fois sur la base des noms et sur la base des signatures des fichiers.

Conformément à l'invention, il est essentiel de pouvoir obtenir la liste des fichiers ajoutés localement dans la zone de fichiers partagés dans le réseau par un pair.

Dans un mode particulier de réalisation de l'invention, ceci se fait par différence entre :
- la liste de tous les fichiers partagés par le pair sur le réseau, cette liste étant reçue du pair lui-même lorsqu'il souhaite effectuer un téléchargement ; et
- la liste des fichiers téléchargés par ce pair dans le réseau, cette liste étant reçue en provenance d'une sonde de supervision conforme à l'invention.

En effet, selon un deuxième aspect, l'invention vise aussi une sonde de supervision des échanges dans un réseau de pairs comportant :
- des moyens de détection des fragments de fichiers téléchargés par au moins un pair du réseau ; et
- des moyens d'envoi à un dispositif de détection tel que défini ci-dessus d'un message comportant un identifiant de ce pair et au moins un identifiant des fragments de fichiers.

Corrélativement, l'invention vise aussi un procédé de supervision des échanges dans un réseau de pairs comportant :
- une étape de détection des fragments de fichiers téléchargés par au moins un pair de ce réseau ; et
- une étape d'envoi à un dispositif de détection tel que défini ci-dessus d'un message comportant un identifiant du pair et au moins un identifiant des fragments de fichiers.

Dans un mode préféré de réalisation de l'invention, le dispositif de détection (ou le procédé de détection) peut être incorporé (ou mis en oeuvre) dans un serveur d'indexation du réseau de pairs, un tel serveur étant une sorte d'annuaire comportant, pour chaque pair du réseau, la liste des fichiers partagés par ce pair.

Le dispositif de détection peut aussi être incorporé dans un équipement réseau par lequel le serveur d'indexation accède au réseau de pairs.

En tout état de cause, il est important que le dispositif de détection soit informé des messages de mise à jour des listes de fichiers partagés par les pairs, celles-ci étant envoyées au serveur d'indexation avant chaque téléchargement par un pair.

Les sondes de supervision (ou les procédés de supervision) peuvent être incorporés (ou mis en oeuvre) dans des passerelles par lesquelles les pairs accèdent au réseau, ou dans des routeurs du réseau.

Il est préférable que ces sondes ne soient pas incorporées dans les pairs eux-mêmes afin de ne pas être corrompues par les vers.

Dans un mode de réalisation de l'invention, lorsqu'un fichier installé frauduleusement dans un pair est détecté, le dispositif de détection selon l'invention génère une alerte vers les pairs infectés, une telle alerte pouvant contenir un ordre de mise à jour d'un antivirus par le pair.

Dans un autre mode de réalisation, une base de données des fichiers frauduleux est mise à jour, par exemple au niveau du serveur d'indexation, pour que les antivirus puissent s'y référer. Cette base de données peut contenir les signatures de ces fichiers.

Dans un mode particulier de réalisation, les différentes étapes du procédé de détection sont déterminées par des instructions de programmes d'ordinateurs.

En conséquence, l'invention vise aussi un programme d'ordinateur sur un support d'informations, ce programme étant susceptible d'être mis en oeuvre dans un dispositif de détection ou plus généralement dans un ordinateur, ce programme comportant des instructions adaptées à la mise en oeuvre des étapes d'un procédé de supervision tel que décrit ci-dessus.

Au moins l'un ou l'autre de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement un réseau de pairs dans lequel l'invention peut être mise en oeuvre ;
- les figures 2A à 2E représentent des listes de fichiers partagés par les pairs du réseau de la figure 1 ;
- la figure 3 représente, dans leur environnement, des sondes de supervision et un dispositif de détection conforme à l'invention ;
- la figure 4 représente, de façon schématique, une sonde de supervision conforme à l'invention dans un mode particulier de réalisation ;
- la figure 5 représente, de façon schématique, un dispositif de détection conforme à l'invention dans un mode particulier de réalisation ;
- la figure 6 représente, sous forme d'organigramme, les principales étapes d'un procédé de supervision conforme à l'invention dans un mode particulier de réalisation ; et
- la figure 7 représente, sous forme d'organigramme, les principales étapes d'un procédé de détection conforme à l'invention dans un mode particulier de réalisation.

### Description détaillée d'un mode de réalisation

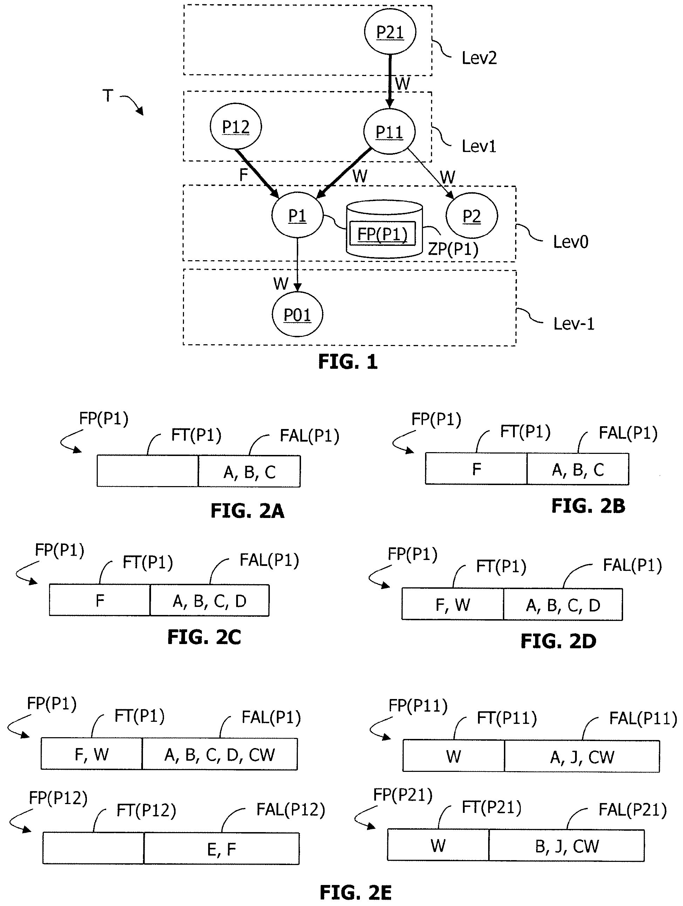

La **figure 1** représente un réseau de six pairs P01, P1, P2, P11, P12, P21.

Sur cette figure, une flèche est dirigée d'un premier pair (par exemple P11) vers un deuxième pair (par exemple P1) lorsque le deuxième pair P1 a téléchargé au moins un fragment de fichier W à partir du premier pair P11.

Dans ce cas, on dira que le pair P11 est une source du pair P1 ou que le pair P1 est un téléchargeant du pair P11.

Si l'on s'intéresse à un pair particulier du réseau, en l'occurrence le pair P1, cette représentation permet d'obtenir un arbre T représenté en traits forts dont :
- la racine est ce pair P1 ;
- les pairs P11, P12 reliés à la racine P1 sont des sources de niveau 1 (Lev 1) ; et
- le pair P21 relié à une source P11 de niveau 1 est une source de niveau 2 (Lev 2).

Toujours du point de vue de P1 :
- le pair P2 qui comporte une source P11 commune avec P1 peut être qualifié de « pair frère », ou pair de même niveau (Lev 0) ; et
- le pair P01, téléchargeant de P1 est un pair de premier niveau inférieur Lev-1.

Comme mentionné précédemment, dans un mode de réalisation particulier de l'invention, une condition pour qu'un fichier soit considéré comme ayant été frauduleusement installé dans un pair P1 est que ce fichier se retrouve dans la liste des fichiers ajoutés localement dans les zones de partage :
1) du pair P1 ;
2) d'une source P11 de P1 ;
3) d'une source P21 d'une source P11 de P1 ;
4) d'un frère P2 de P1 ; et
5) d'un téléchargeant P01 de P1.

Dans l'exemple de réalisation décrit ci-après, on considèrera qu'un fichier a été frauduleusement installé dans un pair P1 dès lors que les trois premières conditions 1) à 3) sont réunies.

Sur la figure 1, on a représenté la zone ZP(P1) de partage du pair P1, les zones de partage des autres pairs n'étant pas représentées par souci de simplification de la figure.

La zone de partage ZP(P1) du pair P1 contient une liste FP(P1) des fichiers partagés par ce pair.

En référence à la **figure 2A****,** on distingue, dans la liste FP(P1) des fichiers partagés par le pair P1 :
- d'une part, la liste FT(P1) des fichiers téléchargés par le pair P1 sur le réseau de pairs ; et
- d'autre part, la liste FAL(P1) des fichiers ajoutés localement par l'utilisateur du pair P1 dans sa zone de partage.

Dans l'exemple décrit ici, on supposera donc que l'utilisateur du pair P1 a ajouté localement trois fichiers A, B, C dans sa zone de partage ZP(P1).

La **figure 2B** représente la liste FP(P1) des fichiers partagés par P1 après le téléchargement par le pair P1 d'un fichier F, la source de ce fichier étant le pair P12 de la figure 1.

En référence à la **figure 2C****,** on supposera que l'utilisateur du pair P1 a ajouté localement un fichier D dans sa zone de partage ZP(P1).

Nous supposons maintenant, en référence à la **figure 2D****,** que le pair P1 télécharge un ver passif W de la source P11.

De façon connue de l'homme du métier, ce ver passif W s'installe dans la liste FT(P1) des fichiers téléchargés par P1.

Puis, en référence à la **figure 2E****,** on suppose que le ver passif W se clone en un ou plusieurs fichiers dans la liste des fichiers ajoutés localement FAL(P1). Ici, il se clone sous la forme d'un unique fichier CW.

A la **figure 2E****,** on a également représenté les listes FP(P11), FP(P12) et FP(P21) des fichiers partagés par les pairs P11, P12 et P21 de la figure 1.

On remarquera que le ver passif W est également présent dans les listes FT(P11) et FT(P21) des fichiers téléchargés par P11 et P21 et que son clone CW est présent dans les listes FAL(P11) et FAL(P21) des fichiers ajoutés localement dans les zones de partage Z(P11) et Z(P21) des pairs P11 et P21. Ceci s'explique par le fait que le ver passif W a été téléchargé du pair P1 à partir de la source P11 et du pair P11 à partir de la source P21.

Mais on remarquera également que le fichier A est présent à la fois dans la liste des fichiers ajoutés localement dans la zone de partage du pair P1 et dans la liste FAL(P11) des fichiers ajoutés localement dans la zone de partage du pair P11.

Il s'agit d'une coïncidence.

Mais il n'est pas possible de détecter ce fait si l'on se limite à comparer les listes des fichiers ajoutés localement dans les zones de partage des pairs P1 et P11.

C'est pourquoi, dans un mode particulier de réalisation de l'invention, on compare ces listes sur au moins deux niveaux.

En effet, si l'on s'intéresse aux fichiers communs aux trois listes FAL(P1), FAL(P11) et FAL(P21), on ne retrouve que le clone CW.

Le clone CW peut ainsi être détecté par l'invention sans faux positif.

Conformément à l'invention, on considère par ailleurs que le dernier fichier W téléchargé par le pair P1 juste avant l'ajout du clone CW dans la zone Z(P1) des fichiers partagés par ce pair P1 est un ver passif.

Un tel ver passif W est donc également détecté sans faux positif.

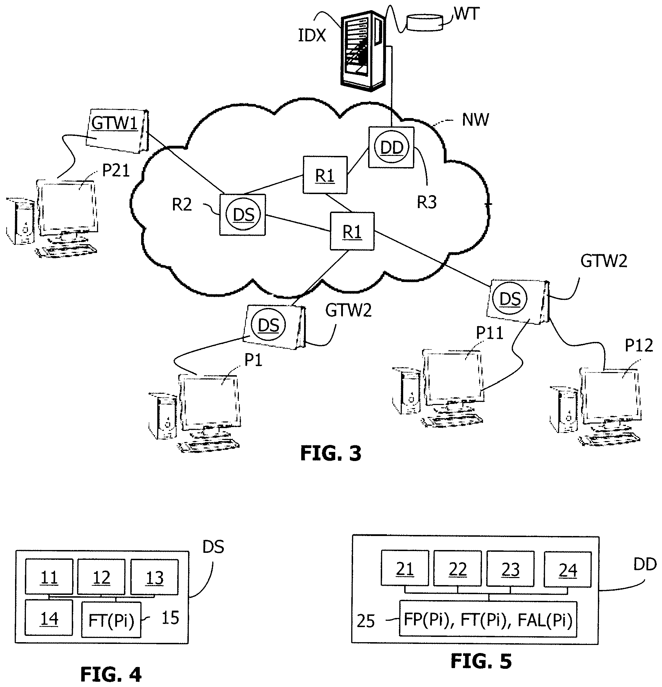

Sur la **figure 3****,** on a représenté des sondes de supervision DS et un dispositif de détection DD conformes à l'invention dans un mode de réalisation.

Dans l'exemple décrit ici, le dispositif de détection DD est placé dans un routeur R3 par lequel un serveur d'indexation IDX accède au réseau de pairs NW. Un tel serveur d'indexation est une sorte d'annuaire comportant, pour chaque pair du réseau, la liste des fichiers partagés par ce pair.

Certaines sondes de supervision DS sont placées dans des passerelles résidentielles GTW2 par lesquelles les pairs P1, P11 et P12 accèdent au réseau NW.

L'homme du métier comprendra que la sonde installée dans une passerelle résidentielle GTW2 est adaptée à détecter tout fichier téléchargé du réseau de pairs par les terminaux connectés à cette passerelle.

Dans l'exemple de la figure 3, le pair P21 est connecté à une passerelle GTW1 qui ne comporte pas de sonde de supervision selon l'invention.

Mais cette passerelle est elle-même raccordée à un routeur 2 dans lequel est installée une sonde de supervision DS conforme à l'invention apte à détecter tout fichier téléchargé par le pair P21.

De façon connue, lorsqu'un pair P1, P11, P12, P21 souhaite télécharger un fichier du réseau de pairs, il envoie automatiquement la liste FP(Pi) des fichiers présents dans sa zone partagée ZP(Pi) au serveur d'indexation IDX.

Conformément à l'invention, lorsqu'une sonde de supervision DS détecte qu'un pair télécharge un fichier du réseau de pairs, elle envoie, au dispositif de détection selon l'invention, l'identifiant Pi de ce pair et au moins un identifiant du fichier téléchargé.

Dans le mode de réalisation décrit ici, la sonde de supervision envoie à la fois le nom du fichier téléchargé et sa signature.

La **figure 4** représente, de façon schématique, une sonde de supervision DS conforme à l'invention.

Dans le mode de réalisation décrit, cette sonde DS a l'architecture matérielle d'un ordinateur.

Elle comporte un processeur 11, une mémoire vive de type RAM 12, une mémoire morte de type ROM 13, des moyens 14 de communication sur le réseau de pairs et une mémoire non volatile réinscriptible 15 de type flash.

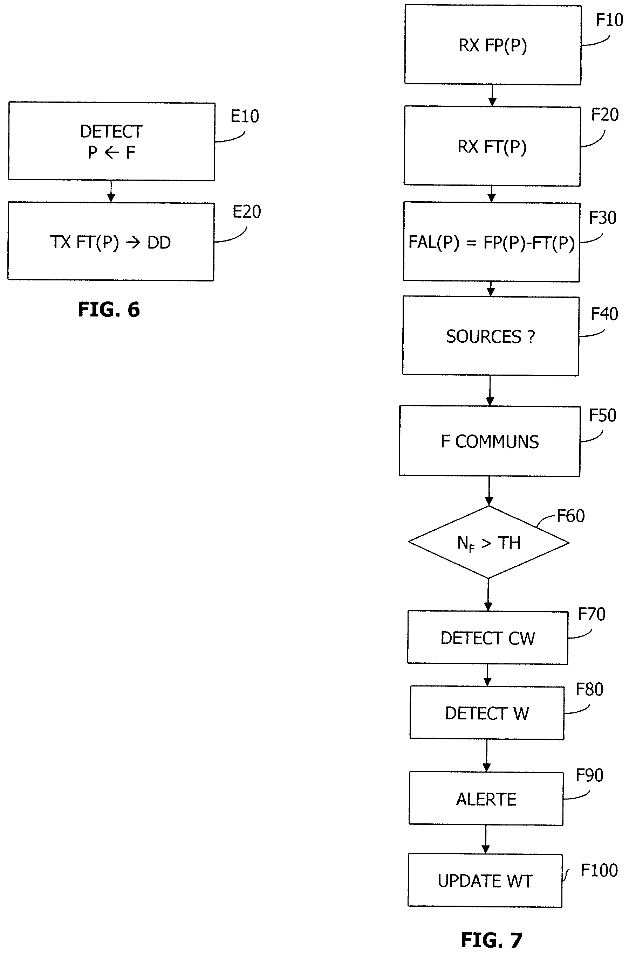

La mémoire morte 13 constitue un support d'enregistrement conforme à l'invention lisible par la sonde de supervision DS, sur lequel est enregistré un programme d'ordinateur conforme à l'invention comprenant des instructions pour exécuter le procédé de supervision selon l'invention et dont les principales étapes sont données à la figure 6.

Dans la mémoire flash 15, l'organe de supervision DS comporte la liste FT(Pi) des fichiers téléchargés par un pair Pi, liste qu'elle peut envoyer, par ses moyens de communication 14, au dispositif de détection DD selon l'invention.

La **figure 5** représente, de façon schématique, un dispositif de détection DD conforme à l'invention.

Dans le mode de réalisation décrit ici, ce dispositif de détection a l'architecture d'un ordinateur. Il comporte un processeur 21, une mémoire vive de type RAM 22, une mémoire morte de type ROM 23, des moyens 24 de communication sur le réseau de pairs et une mémoire non volatile réinscriptible 25 de type flash.

La mémoire morte 23 constitue un support d'enregistrement conforme à l'invention, lisible par le dispositif de détection DD sur lequel est enregistré un programme d'ordinateur conforme à l'invention, ce programme comportant des instructions pour exécuter les étapes d'un procédé de détection conforme à l'invention dont les principales étapes sont représentées, sous forme d'organigramme, à la figure 7.

Dans le mode de réalisation décrit ici, la mémoire flash 25 comporte, pour chaque pair Pi du réseau de pairs, la liste FP(Pi) de tous les fichiers partagés par le pair Pi et la liste FT(Pi) des fichiers téléchargés par ce pair.

Ces listes sont respectivement reçues en provenance des pairs eux-mêmes lorsqu'ils souhaitent télécharger un fichier, des sondes de supervision lorsqu'un pair télécharge effectivement un fichier.

Par différence entre ces deux listes, le dispositif de détection DD conforme à l'invention obtient la liste FAL(Pi) des fichiers ajoutés localement dans la zone de partage ZP(Pi) d'un pair Pi, liste qu'il mémorise également dans sa mémoire flash 25.

La **figure 6** représente, sous forme d'organigramme, les principales étapes d'un procédé de supervision conforme à l'invention dans un mode de réalisation.

Ce procédé peut être mis en oeuvre par les dispositifs de supervision selon l'invention, notamment dans une passerelle résidentielle GTW2 ou dans un routeur R2 du réseau de pairs.

Ce procédé comporte principalement une étape E10 de détection d'un téléchargement de fichiers F par un pair P et une étape E20 d'envoi, au dispositif de détection DD selon l'invention, de l'identifiant du pair et d'au moins un identifiant du fichier téléchargé, à savoir dans cet exemple, son nom et sa signature.

La **figure 7** représente, sous forme d'organigramme, les principales étapes d'un procédé de détection conforme à l'invention dans un mode de réalisation particulier.

Ce procédé de détection peut être mis en oeuvre dans un routeur R3 par lequel le serveur d'indexation IDX accède au réseau de pairs.

En variante, il peut aussi être mis en oeuvre dans le serveur d'indexation IDS lui-même.

Ce procédé comporte une étape F10 au cours de laquelle il reçoit, d'un pair P1, la liste FP(P1) de tous les fichiers partagés par ce pair, cette liste étant reçue à chaque fois que le pair P1 souhaite effectuer un téléchargement.

Puis, lorsque le pair P1 effectue effectivement un téléchargement, le dispositif de détection DD selon l'invention reçoit, au cours d'une étape F20, d'une sonde DS de supervision du pair P1, l'identifiant du pair P et le nom et/ou la signature du fichier téléchargé.

Au cours d'une étape F30, le dispositif de détection détermine, par différence entre les listes reçues aux étapes F10 et F20, la liste des fichiers ajoutés localement dans la zone de partage du pair P1.

Puis, dans le mode de réalisation décrit ici, le dispositif de détection DD selon l'invention identifie, au cours d'une étape F40, les sources du réseau de pairs depuis lesquelles le pair P1 a effectué des téléchargements et, éventuellement, pour chacune de ces sources prise individuellement, les sources de cette source comme décrit précédemment en référence à la figure 1.

Dans cet exemple, si le procédé de détection selon l'invention travaille sur deux niveaux Lev1 et Lev2, il identifiera :
- d'une part la source P11 de niveau 1 et sa source P21 de niveau 2 ;
- d'autre part la source P12 de niveau 1.

Ensuite, au cours d'une étape F50, le dispositif de détection selon l'invention détermine, pour chacune des sources de niveau 1 identifiées à l'étape précédente (par exemple P11), la liste FAL(P11) des fichiers ajoutés localement dans la zone de partage de cette source, et le cas échéant la liste FAL(P21) des fichiers ajoutés localement dans la zone de partage des sources P21 de niveau 2 rattachés à cette source P11 dans l'arbre T.

Le dispositif de détection recherche ensuite les fichiers en commun dans les listes FAL(P1), FAL(P11) et FAL(21). Il identifie les fichiers W et CW.

Au cours d'une étape F60, le dispositif de détection DD selon l'invention détermine si le nombre de fichiers communs entre ces trois listes est supérieur à un seuil TH prédéterminé.

Si c'est le cas, le dispositif de détection DD considère que les fichiers W et CW en commun sont des fichiers installés frauduleusement sur le pair P1 et sur ses sources P11, P21.

De la même façon, le dispositif de détection recherche ensuite les fichiers en commun dans les listes FAL(P1) et FAL(P12). Il n'identifie aucun fichier en commun.

L'invention permet aussi de détecter les vers passifs.

En effet, au cours d'une étape F80, le dispositif de détection selon l'invention détermine si les fichiers détectés comme étant installés frauduleusement l'ont été juste après le téléchargement d'un logiciel sur le réseau auquel cas ce logiciel est considéré comme un ver passif.

Au cours d'une étape F90, le dispositif de détection DD selon l'invention envoie un message d'alerte à tous les pairs infectés du réseau, et éventuellement à d'autres pairs du réseau, pour les informer des noms ou signatures des fichiers frauduleux à savoir des vers passifs et de leurs clones.

Dans le mode de réalisation décrit ici, le dispositif de détection selon l'invention envoie un message au serveur d'indexation IDX pour que celui-ci mette à jour sa base de données de vers passifs.

## Revendications

1. Procédé de détection d'au moins un fichier installé frauduleusement dans un premier pair (P1) d'un réseau de pairs, **caractérisé en ce qu'**il comporte :
- une étape (F30) de détermination d'une première liste (FAL(P1)) comportant des fichiers ajoutés localement dans une zone (ZP(P1)) de fichiers partagés dans le réseau par ledit premier pair (P1);
- une étape (F40) d'identification d'au moins un deuxième pair (P11, P12) à partir duquel ledit premier pair (P1) a téléchargé au moins un fragment de fichier dans ledit réseau ;
- une étape (F50) de détermination, pour au moins un deuxième pair identifié (P11, P12), d'une deuxième liste (FAL(P11), FAL(P12)) comportant des fichiers ajoutés localement dans une zone (ZP(P11), ZP(P12)) de fichiers partagés dans le réseau par ce deuxième pair ;
- une étape (F50) de recherche, pour au moins une des deuxièmes listes (FAL(P11)), d'au moins un fichier commun à ladite première liste (FAL(P1)) et ladite deuxième liste (FAL(P11)) ; et
- une étape (F70) au cours de laquelle on identifie ledit au moins un fichier commun trouvé comme étant un fichier installé frauduleusement dans ledit premier pair (P1), si le nombre des fichiers communs trouvés est supérieur à un seuil (TH) prédéterminé (F60).

2. Procédé selon la revendication 1, **caractérisé en ce que**, lors de l'étape de recherche, on conserve uniquement des fichiers communs qui ont aussi été ajoutés localement dans une zone (ZP(P21)) de fichiers partagés dans le réseau d'un troisième pair (P21) à partir duquel ledit deuxième pair (P11) a téléchargé au moins un fragment de fichier (W) dans ledit réseau.

3. Procédé de détection selon la revendication 1 ou 2, dans lequel on identifie (F80) que le dernier fichier (W) téléchargé par un pair (P1) juste avant l'ajout d'au moins un fichier détecté (F70) comme étant frauduleux dans la zone (ZP(P1)) des fichiers partagés par ce pair (P1) est un ver passif circulant dans ledit réseau de pairs.

4. Procédé selon la revendication 1, **caractérisé en ce que** la dite étape (F50) de recherche de fichiers communs à deux listes se fait sur la base des noms et/ou de signatures de ces fichiers.

5. Procédé selon la revendication 1, **caractérisé en ce qu'**on détermine la liste (FAL(P)) des fichiers ajoutés localement dans la zone (ZP(P)) de fichiers partagés dans le réseau par un pair (P) par différence entre :
- la liste (FP(P)) de tous les fichiers partagés par ledit pair (P) sur le réseau, cette liste étant reçue (F10) dudit pair (P) lorsqu'il souhaite effectuer un téléchargement ; et
- la liste (FT(P)) des fichiers téléchargés par ce pair (P) dans ledit réseau, cette liste étant reçue (F20) en provenance d'une sonde de supervision (DS) dudit réseau.

6. Programme d'ordinateur comportant des instructions pour l'exécution des étapes du procédé de détection selon la revendication 1 lorsque ledit programme est exécuté par un ordinateur.

7. Support d'enregistrement lisible par un ordinateur sur lequel est enregistré un programme d'ordinateur comprenant des instructions pour l'exécution des étapes du procédé de détection selon la revendication 1.

8. Dispositif (DD) de détection d'au moins un fichier installé frauduleusement dans un premier pair (P1) d'un réseau de pairs, **caractérisé en ce qu'**il comporte :
- des moyens (21) de détermination d'une première liste (FAL(P1)) comportant des fichiers ajoutés localement dans une zone (ZP(P1)) de fichiers partagés dans le réseau par ledit premier pair (P1);
- des moyens (21) d'identification d'au moins un deuxième pair (P11, P12) à partir duquel ledit premier pair (P1) a téléchargé au moins un fragment de fichier dans ledit réseau ;
- des moyens (21) de détermination, pour au moins un deuxième pair identifié (P11, P12), d'une deuxième liste (FAL(P11), FAL(P12)) comportant des fichiers ajoutés localement dans une zone (ZP(P11), ZP(P12)) de fichiers partagés dans le réseau par ce deuxième pair ;
- des moyens (21) de recherche, pour au moins une des deuxièmes listes (FAL(P11)), d'au moins un fichier commun à ladite première liste (FAL(P1)) et ladite deuxième liste (FAL(P11)) ; et
- des moyens (21) pour identifier ledit au moins un fichier commun trouvé comme étant un fichier installé frauduleusement dans ledit premier pair (P1), si le nombre des fichiers communs trouvés est supérieur à un seuil (TH) prédéterminé.

9. Système de détection d'au moins un fichier installé frauduleusement dans un premier pair (P1) d'un réseau de pairs comprenant :
- un dispositif de détection selon la revendication 8 ;
- au moins une sonde de supervision des échanges dans un réseau de pairs comportant :
- des moyens (11, 14) de détection de fragments de fichiers téléchargés par au moins un pair (P1) dudit réseau ; et
- des moyens (14) d'envoi au dispositif de détection d'un message comportant un identifiant (P1) dudit pair et au moins un identifiant desdits fragments de fichiers.

## Patentansprüche

1. Verfahren zur Erkennung von mindestens einer Datei, die in betrügerischer Absicht in einem ersten Peer (P1) eines Peer-to-Peer-Netzwerks installiert wird, **dadurch gekennzeichnet, dass** es Folgendes aufweist:
- einen Schritt (F30) des Bestimmens einer ersten Liste (FAL(P1)), die Dateien aufweist, die lokal in einen Bereich (ZP(P1)) von Dateien hinzugefügt werden, die in dem Netzwerk von dem ersten Peer (P1) geteilt werden;
- einen Schritt (F40) des Identifizierens von mindestens einem zweiten Peer (P11, P12), aus dem der erste Peer (P1) mindestens ein Dateifragment in dem Netzwerk heruntergeladen hat;
- einen Schritt (F50) des Bestimmens für mindestens einen zweiten identifizierten Peer (P11, P12) einer zweiten Liste (FAL(P11), FAL(P12)), die Dateien aufweist, die lokal in einen Bereich (ZP(P11), ZP(P12)) von Dateien hinzugefügt werden, die in dem Netzwerk von diesem zweiten Peer geteilt werden;
- einen Schritt (F50) des Suchens für mindestens eine der zweiten Listen (FAL(P11)) nach mindestens einer Datei, die mit der ersten Liste (FAL(P1)) und der zweiten Liste (FAL(P11)) gemeinsam ist; und
- einen Schritt (F70), bei dem die mindestens eine gefundene gemeinsame Datei als eine in dem ersten Peer (P1) in betrügerischer Absicht installierte Datei identifiziert wird, wenn die Anzahl der gefundenen gemeinsamen Dateien größer als ein vorbestimmter (F60) Schwellenwert (TH) ist.

2. Verfahren nach dem Anspruch 1, **dadurch gekennzeichnet, dass** bei dem Schritt des Suchens nur gemeinsame Dateien beobachtet werden, die auch lokal in einen Bereich (ZP(P21)) von Dateien hinzugefügt worden sind, die in dem Netzwerk von einem dritten Peer (P21) geteilt werden, aus dem der zweite Peer (P11) mindestens ein Dateifragment (W) in dem Netzwerk heruntergeladen hat.

3. Verfahren zur Erkennung nach Anspruch 1 oder 2, wobei identifiziert wird (F80), dass die letzte Datei (W), die von einem Peer (P1) kurz vor dem Hinzufügen von mindestens einer Datei (F70), die als betrügerisch erkannt wird, in den Bereich (ZP(P1)) der Dateien, die von diesem Peer (P1) geteilt werden, heruntergeladen wird, ein passiver Wurm ist, der in dem Peer-to-Peer-Netzwerk zirkuliert.

4. Verfahren nach Anspruch 1, **dadurch gekennzeichnet, dass** der Schritt (F50) des Suchens von Dateien, die zwei Listen gemeinsam sind, auf der Grundlage von Namen und/oder Signaturen dieser Dateien erfolgt.

5. Verfahren nach Anspruch 1, **dadurch gekennzeichnet, dass** die Liste (FAL(P)) der Dateien, die lokal in den Bereich (ZP(P)) von Dateien hinzugefügt werden, die in dem Netzwerk von einem ersten Peer (P1) geteilt werden, als Differenz zwischen Folgendem bestimmt wird:
- der Liste (FP(P)) aller Dateien, die von dem Peer (P) in dem Netzwerk geteilt werden, wobei die Liste von dem Peer (P) erhalten wird (F10), wenn er einen Download durchführen möchte; und
- der Liste (FT(P)) der Dateien, die von diesem Peer (P) in dem Netzwerk heruntergeladen werden, wobei diese Liste von einer Überwachungssonde (DS) des Netzwerks erhalten wird (F20).

6. Computerprogramm, das Anweisungen für die Ausführung der Schritte des Verfahrens zur Erkennung nach Anspruch 1 aufweist, wenn das Programm von einem Computer ausgeführt wird.

7. Computerlesbares Aufzeichnungsmedium, auf dem ein Computerprogramm aufgezeichnet ist, das Anweisungen für die Ausführung der Schritte des Verfahrens zur Erkennung nach Anspruch 1 aufweist.

8. Vorrichtung (DD) zur Erkennung von mindestens einer Datei, die in betrügerischer Absicht in einem ersten Peer (P1) eines Peer-to-Peer-Netzwerks installiert wird, **dadurch gekennzeichnet, dass** es Folgendes aufweist:
- Mittel (21) zum Bestimmen einer ersten Liste (FAL(P1)), die Dateien aufweist, die lokal in einen Bereich (ZP(P1)) von Dateien hinzugefügt werden, die in dem Netzwerk von dem ersten Peer (P1) geteilt werden;
- Mittel (21) zum Identifizieren von mindestens einem zweiten Peer (P11, P12), aus dem der erste Peer (P1) mindestens ein Dateifragment in dem Netzwerk heruntergeladen hat;
- Mittel (21) zum Bestimmen für mindestens einen zweiten identifizierten Peer (P11, P12) einer zweiten Liste (FAL(P11), FAL(P12)), die Dateien aufweist, die lokal in einen Bereich (ZP(P11), ZP(P12)) von Dateien hinzugefügt werden, die in dem Netzwerk von diesem zweiten Peer geteilt werden;
- Mittel (21) zum Suchen für mindestens eine der zweiten Listen (FAL(P11)) nach mindestens einer Datei, die der ersten Liste (FAL(P1)) und der zweiten Liste (FAL(P11)) gemeinsam ist; und
- Mittel (21), um die mindestens eine gefundene gemeinsame Datei als eine in dem ersten Peer (P1) in betrügerischer Absicht installierte Datei zu identifizieren, wenn die Anzahl der gefundenen gemeinsamen Dateien größer als ein vorbestimmter Schwellenwert (TH) ist.

9. System zur Erkennung von mindestens einer Datei, die in betrügerischer Absicht in einem ersten Peer (P1) eines Peer-to-Peer-Netzwerks installiert wird, umfassend:
- eine Vorrichtung zur Erkennung nach Anspruch 8;
- mindestens eine Sonde zur Überwachung der Austausche in einem Peer-to-Peer-Netzwerk, umfassend:
- Mittel (11, 14) zur Erkennung von Dateifragmenten, die durch mindestens ein Peer (P1) des Netzwerks heruntergeladen werden; und
- Mittel (14) zum Senden an die Vorrichtung zur Erkennung einer Nachricht, die eine Kennung (P1) des Peers und mindestens eine Kennung der Dateifragmente aufweist.

## Claims

1. Method for detecting at least one file installed fraudulently in a first peer (P1) of a peer-to-peer network, **characterized in that** it comprises:
- a step (F30) of determination of a first list (FAL(P1)) comprising files added locally in a zone (ZP(P1)) of files shared in the network by said first peer (P1);
- a step (F40) of identification of at least one second peer (P11, P12) from which said first peer (P1) has downloaded at least one file fragment in said network;
- a step (F50) of determination, for at least one identified second peer (P11, P12), of a second list (FAL(P11), FAL(P12)) comprising files added locally in a zone (ZP(P11), ZP(P12)) of files shared in the network by this second peer;
- a step (F50) of searching, for at least one of the second lists (FAL(P11)), for at least one file common to said first list (FAL(P1)) and said second list (FAL(P11)); and
- a step (F70) during which said at least one found common file is identified as being a file installed fraudulently in said first peer (P1), if the number of common files found is greater than a predetermined threshold (TH) (F60).

2. Method according to Claim 1, **characterized in that**, during the searching step, only those common files are retained that have also been added locally in a zone (ZP(P21)) of files shared in the network by a third peer (P21) from which said second peer (P11) has downloaded at least one file fragment (W) in said network.

3. Detection method according to Claim 1 or 2, in which it is identified (F80) that the last file (W) downloaded by a peer (P1) just before the addition of at least one file detected (F70) as being fraudulent in the zone (ZP(P1)) of the files shared by this peer (P1) is a passive worm circulating in said peer-to-peer network.

4. Method according to Claim 1, **characterized in that** said step (F50) of searching for files common to two lists is carried out on the basis of the names and/or of signatures of these files.

5. Method according to Claim 1, **characterized in that** the list (FAL(P)) of the files added locally in the zone (ZP(P)) of files shared in the network by a peer (P) is determined by a difference between:
- the list (FP(P)) of all the files shared by said peer (P) over the network, this list being received (F10) from said peer (P) when it wants to perform a download; and
- the list (FT(P)) of the files downloaded by this peer (P) in said network, this list being received (F20) from a supervisory probe (DS) of said network.

6. Computer program comprising instructions for the execution of the steps of the detection method according to Claim 1 when said program is run by a computer.

7. Computer-readable storage medium on which is stored a computer program comprising instructions for the execution of the steps of the detection method according to Claim 1.

8. Device (DD) for detecting at least one file installed fraudulently in a first peer (P1) of a peer-to-peer network, **characterized in that** it comprises:
- means (21) for determining a first list (FAL(P1)) comprising files added locally in a zone (ZP(P1)) of files shared in the network by said first peer (P1);
- means (21) for identifying at least one second peer (P11, P12) from which said first peer (P1) has downloaded at least one file fragment in said network;
- means (21) for determining, for at least one identified second peer (P11, P12), a second list (FAL(P11), FAL(P12)) comprising files added locally in a zone (ZP(P11), ZP(P12)) of files shared in the network by this second peer;
- means (21) for searching, for at least one of the second lists (FAL(P11)), for at least one file common to said first list (FAL(P1)) and said second list (FAL(P11)); and
- means (21) for identifying said at least one found common file as being a file installed fraudulently in said first peer (P1), if the number of common files found is greater than a predetermined threshold (TH).

9. System for detecting at least one file installed fraudulently in a first peer (P1) of a peer-to-peer network comprising:
- a detection device according to Claim 8;
- at least one supervisory probe of the exchanges in a peer-to-peer network comprising:
- means (11, 14) for detecting file fragments downloaded by at least one peer (P1) of said network; and
- means (14) for sending to the detection device a message comprising an identifier (PI) of said peer and at least one identifier of said file fragments.
